# EUROPÄISCHE PATENTSCHRIFT

(11) **EP 3 208 619 B1**
(45) Veröffentlichungstag und Bekanntmachung des Hinweises auf die Patenterteilung: **06.04.2022**
(21) Anmeldenummer: 17160467.1
(22) Anmeldetag: 25.02.2013
(51) Int. Cl.: G01P 21/02, H02K 11/00, H02K 11/20

(54) **VERFAHREN ZUM ÜBERPRÜFEN EINES DREHZAHLSYSTEMS EINER MOTORBETRIEBENEN VORRICHTUNG**
METHOD FOR CHECKING A SPEED SYSTEM OF A MOTORISED DEVICE
PROCÉDÉ DE CONTRÔLE D'UN SYSTÈME DE MESURE DE RÉGIME D'UN DISPOSITIF MOTORISÉ

(30) Priorität: 12.04.2012 DE 102012205973
(43) Veröffentlichungstag der Anmeldung: 23.08.2017
(62) Teilanmeldung aus: 13156548.3
(73) Patentinhaber: Robert Bosch GmbH, 70442 Stuttgart (DE)
(72) Erfinder: Wiszniewski, Jacek, 70771 Leinfelden-Echterdingen (DE); Pogorzelski, Kamil, 70176 Stuttgart (DE); Rombach, Daniel, 72555 Metzingen (DE)

(56) Entgegenhaltungen:
- EP-A1- 1 670 134
- JP-A- H0 536 176
- JP-A- 2000 261 904
- US-A- 5 459 732
- US-A- 5 633 797
- US-A1- 2008 129 549
- US-A1- 2008 315 909

## Beschreibung

Die Erfindung betrifft ein Verfahren zum Überprüfen eines Drehzahlsystems einer motorbetriebenen Vorrichtung.

### Stand der Technik

Im Stand der Technik sind verschiedene Verfahren zum Erfassen und Überprüfen einer Drehzahl von motorbetriebenen Vorrichtungen bekannt.

Aus der US 5 459 732 A geht eine Diagnosevorrichtung für Sensoren eines Antiblockiersystems eines Fahrzeugs hervor. Dazu ist bei stillstehendem Fahrzeug vorgesehen, dass ein Testsignal, welches eine bekannte Geschwindigkeit repräsentiert, an eine Timereinrichtung der Diagnosevorrichtung übermittelt wird um zu prüfen, ob die Timereinrichtung die korrekten Fahrzeugräder bestimmt.

Die US 5 633 797 A offenbart ein Verfahren und ein System zum Testen von Sensoren in einem Antiblockiersystem und/oder in einem Traktionssteuerungssystem eines Fahrzeugs. Überprüft wird eine Funktionsfähigkeit einer Radgeschwindigkeitssensor-Eingangsschaltung eines Fahrzeugs.

Die US 2008/0129549 A1 zeigt ein System und ein Verfahren zum Detektieren eines Dekodierfehlers einer Kodiereinrichtung. Offenbart ist ein Steuerungssystem mit einem Inkrementalgeber und einem Fehlerdetektor zum Sensieren einer Drehgeschwindigkeit bzw. einer Position einer Welle einer Maschine.

In der JP 2000 261904 A ist eine Geschwindigkeitsüberprüfung eines batteriebetriebenen Gabelstaplers offenbart. Eine von einem Sensor erfasste Geschwindigkeit wird als Rückkopplungssignal einem Fahrpedal zugeführt, um auf diese Weise die Geschwindigkeit zu regeln. Eine hohe Betriebseffizienz des batteriebetriebenen Gabelstaplers soll dadurch erreicht werden, dass ein übermäßiger elektrischer Stromfluss vermieden wird, um dadurch die Batterie zu schonen.

Die JP H05 36176 A offenbart eine automatische Cassetten-Ladevorrichtung zum Aufgreifen einer beliebigen Cassette aus einer Vielzahl von Videocassetten. Intendiert ist die Bereitstellung eines fehlerfreien Drehwertgebers, der in der Lage ist, eine Fehlfunktion einer Hebeeinrichtung zu vermeiden. Ferner ist eine elektrische Antriebsspannung, die einen Schwellwert überschreiten muss, damit sich der Motor dreht, um damit die Hebeeinrichtung anzutreiben, gezeigt.

### Offenbarung der Erfindung

Es ist eine Aufgabe der Erfindung, ein gegenüber dem Stand der Technik verbessertes Verfahren zum Überprüfen eines Drehzahlsystems einer motorbetriebenen Vorrichtung bereitzustellen.

Die Aufgabe wird gelöst mit einem Verfahren zum Überprüfen einer Drehzahlerfassungseinrichtung und einer als Elektrowerkzeug oder Waschmaschine ausgebildeten, motorbetriebenen Vorrichtung, aufweisend die Schritte:
a) Einschalten der motorbetriebenen Vorrichtung;
b) Prüfen, ob an einem ersten Eingang einer Steuerungseinrichtung ein von der Drehzahlerfassungseinrichtung erfasstes Drehzahlsignal der motorbetriebenen Vorrichtung anliegt;
c) Ausgeben eines Testsignals über einen Ausgang der Steuerungseinrichtung an die Drehzahlerfassungseinrichtung, falls in Schritt b) kein Drehzahlsignal sensiert wird;
d) Senden des durch die Drehzahlerfassungseinrichtung in einer definierten Art und Weise verarbeiteten Testsignals an den ersten Eingang der Steuerungseinrichtung;
e) Erkennen eines Fehlers der Drehzahlerfassungseinrichtung, falls das ausgegebene Testsignal am ersten Eingang der Steuerungseinrichtung in der definierten Art und Weise nicht vorliegt;
f) Erfassen eines Drehzahlwerts der motorbetriebenen Vorrichtung während einer Softstartphase, in der die Drehzahl der motorbetriebenen Vorrichtung langsam an einen definierten Drehzahlwert herangeführt wird;
g) Erkennen eines Fehlers der motorbetriebenen Vorrichtung, falls der definierte
Drehzahlwert innerhalb einer definierten Zeitspanne während der Softstartphase nicht erreicht wurde.

Ein Vorteil des erfindungsgemäßen Verfahrens besteht darin, dass bei einem Ausbleiben eines Drehzahlsignals der motorbetriebenen Vorrichtung festgestellt werden kann, ob ein Defekt des Drehzahlsystems vorliegt. Das Verfahren kann vorteilhaft jedes Mal dann angewendet werden, wenn nicht klar ist, was die Gründe für das Ausbleiben des Drehzahlsignals sind.

Dies wird durch die Kombination eines hardwarebasierten Ansatzes mit einem softwarebasierten Ansatz erzielt. Gegenüber den im Stand der Technik offenbarten Prüfszenarien wird somit ein "erweitertes Prüfszenario" bereitgestellt, welches eine verbesserte Fehleranalyse bzw. verbesserte Diagnosetiefe des Drehzahlsystems erlaubt. Dadurch kann z.B. vorteilhaft unterschieden werden, ob ein Hardwaredefekt der Drehzahlerfassungseinrichtung vorliegt oder ob ein Signal eines Drehzahlsensors deshalb nicht erfasst wird, weil der Drehzahlsensor falsch positioniert bzw. defekt ist oder weil ein Drehzahlgeber defekt ist. Im Ergebnis ist es mittels des erfindungsgemäßen Verfahrens möglich, im Stillstand und in einer Softstartphase der motorbetriebenen Vorrichtung, die eine definierte Startphase der Vorrichtung repräsentiert, zu überprüfen, ob das Drehzahlsystem der motorbetriebenen Vorrichtung ordnungsgemäß funktioniert.

Ergänzend sieht das Verfahren die folgenden Schritte vor:
h) Erfassen eines Motorstromsignals der motorbetriebenen Vorrichtung an einem zweiten Eingang der Steuerungseinrichtung;
i) Erkennen eines Fehlers der Drehzahlerfassungseinrichtung, falls in Schritt b) kein Drehzahlsignal erfasst wird und das in Schritt h) erfasste Motorstromsignal einen definierten Pegel unterschreitet.

Ein Vorteil besteht darin, dass vorhandene Eingänge der Steuerungseinrichtung verwendet werden können, um ein Motorstromsignal auszuwerten. Nur für den Fall, dass kein Drehzahlsignal vorliegt und eine Höhe des Motorstroms einen definierten Wert unterschreitet, wird ein Fehlerfall des Drehzahlsystems erkannt. Weiterhin kann das Verfahren um folgenden Schritt ergänzt werden:
j) Erkennen eines Fehlers der motorbetriebenen Vorrichtung, falls nach einer definierten Betriebsdauer der motorbetriebenen Vorrichtung ein definierter Drehzahlwert nicht erreicht wurde. Vorteilhaft kann auf diese Weise im regulären Betrieb der Vorrichtung überprüft werden, ob das Drehzahlsystem einwandfrei arbeitet.

Die Erfindung wird im Folgenden anhand der Figuren näher beschrieben.

Die Figuren sind vor allem dazu gedacht, die erfindungswesentlichen Prinzipien zu verdeutlichen.

In den Figuren zeigt:
- Fig. 1a: eine prinzipielle Darstellung einer Art einer Ausführung des erfindungsgemäßen Verfahrens;
- Fig. 1b: eine prinzipielle Darstellung einer weiteren Art einer Ausführung des erfindungsgemäßen Verfahrens; und
- Fig. 2: eine prinzipielle Darstellung einer weiteren Art einer Ausführung des erfindungsgemäßen Verfahrens.

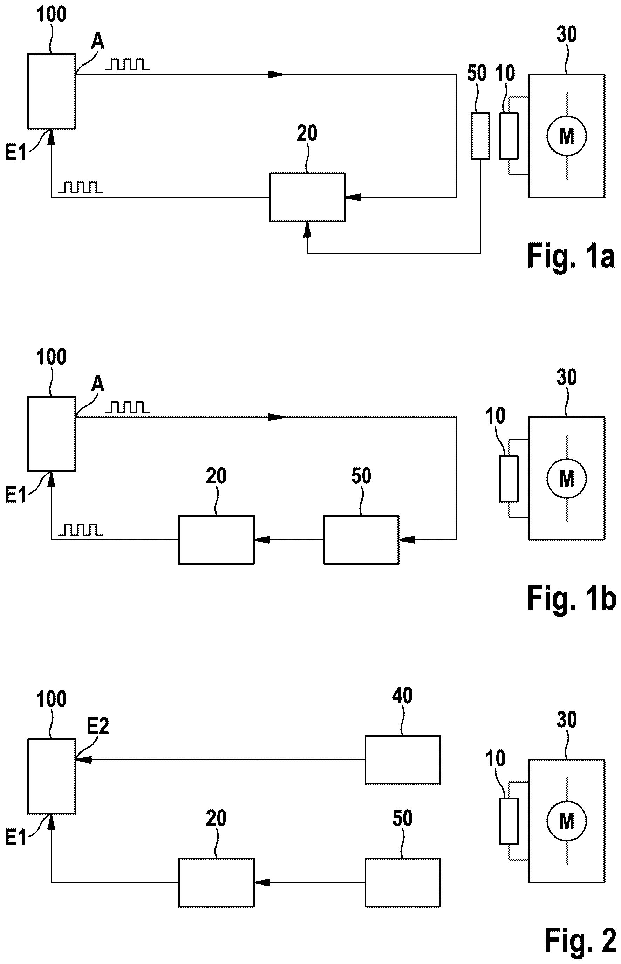

Fig. 1a zeigt in stark vereinfachter Form eine Möglichkeit, wie das erfindungsgemäße Verfahren ausführbar ist. Eine Steuerungseinrichtung 100 weist einen ersten Eingang E1 und einen Ausgang A auf. Über den Ausgang A wird eine Testsequenz bzw. ein Testsignal ausgegeben, falls am ersten Eingang E1 ein Drehzahlsignal einer motorbetriebenen Vorrichtung 30 nicht sensiert wird. Der Ausgang A kann dabei nur während des Ausgebens des Testsignals als Ausgang geschaltet sein, ansonsten kann er ein Open-Collector-Anschluss oder ein Eingang der Steuerungseinrichtung 100 sein. Das Drehzahlsignal wird über eine Drehzahlerfassungseinrichtung 20 geführt, die eine Drehzahl der motorbetriebenen Vorrichtung 30 erfasst, digitalisiert, filtert usw.

Beispiele für motorbetriebene Vorrichtungen 30 sind jegliche Arten von Elektrowerkzeugen und Waschmaschinen, bei denen in der Regel eine variable Drehzahl erfasst und überwacht wird. Für den Fall, dass das Drehzahlsignal am ersten Eingang E1 nicht anliegt, wird ein Testsignal, vorzugsweise ein Wechselsignal (z.B. ein pulsweitenmoduliertes Signal) über die Drehzahlerfassungseinrichtung 20 an die Steuerungseinrichtung 100 geschickt. Dadurch wird erwartet, dass die ausgegebene Testsequenz am ersten Eingang E1 der Steuerungseinrichtung 100 je nach Art der Verarbeitung des Testsignals in der Drehzahlerfassungseinrichtung 20 in einer definierten Art und Weise (beispielsweise identisch oder invertiert) vorliegt. Falls dies nicht der Fall ist, wird ein Fehlerfall der Drehzahlerfassungseinrichtung 20 erkannt und es werden entsprechende Aktionen veranlasst.

Das erfindungsgemäße Verfahren zeichnet sich insbesondere dadurch aus, dass in einer so genannten "Softstartphase" der motorbetriebenen Vorrichtung 30, in der die motorbetriebene Vorrichtung 30 langsam an die gewünschte Drehzahl herangeführt wird, überprüft wird, ob innerhalb einer definierten Zeitspanne eine vorgegebene Drehzahl erreicht wurde. Eine Regelung oder Steuerung der Drehzahl kann dabei z.B. mittels einer Phasenanschnittsteuerung oder mittels eines PWM- (pulsweitenmodulierten) Signals durchgeführt werden. Falls die Drehzahl nicht erreicht wurde, wird ein Fehler erkannt.

Fig. 1b zeigt eine abgewandelte Möglichkeit einer Ausführung des erfindungsgemäßen Verfahrens. Es ist erkennbar, dass nunmehr das Testsignal zusätzlich über einen Drehzahlsensor 50 geführt wird, um auch die Funktionalität des Drehzahlsensors 50 zu überprüfen. Der Drehzahlgeber kann beispielsweise als ein Magnetrad, welches auf eine Ankerwelle eines Elektromotors der motorbetriebenen Vorrichtung 30 gepresst ist, ausgebildet sein. Die Funktionsweise ist ansonsten die gleiche wie oben unter Bezugnahme auf Fig. 1a beschrieben.

Fig. 2 zeigt eine Ergänzung des Verfahrens zur Überprüfung des Drehzahlsystems der motorbetriebenen Vorrichtung 30. Es wird mittels einer Motorstromerfassungseinrichtung 40 ein Motorstromsignal der motorbetriebenen Vorrichtung 30 erfasst (z.B. über einen Strommesswiderstand). Das genannte Signal wird an einem zweiten Eingang E2 der Steuerungseinrichtung 100 eingelesen. Gleichzeitig wird eine Drehzahl der motorbetriebenen Vorrichtung 30 erfasst und mittels des Drehzahlsensors 50 und der Drehzahlerfassungseinrichtung 20 am ersten Eingang E1 der Steuerungseinrichtung 100 eingelesen.

Für den Fall, dass keine Drehzahl am ersten Eingang E1 der Steuerungseinrichtung 100 erfasst wird und ein Wert des Motorstroms einen bestimmten Pegel unterschreitet, wird ein Fehlerfall der motorbetriebenen Vorrichtung 30 erkannt. Beispielsweise kann dies dadurch bedingt sein, dass ein Blockierfall der motorbetriebenen Vorrichtung 30 vorliegt, bei dem die Vorrichtung 30 durch äußere Einflüsse mechanisch blockiert ist und bei welchem ein Motorstrom außergewöhnlich groß sein kann. Es kann somit vorteilhaft unterschieden werden, ob tatsächlich ein Blockierfall der motorbetriebenen Vorrichtung 30 oder ein Fehler des Drehzahlsystems 10, 20, 50 vorliegt. Je nach Fehlerfall können sodann geeignete Aktionen zur Behebung des Fehlers getroffen werden.

Eine weitere Ergänzung des erfindungsgemäßen Verfahrens besteht darin, dass in einer regulären Betriebsphase der motorbetriebenen Vorrichtung 30 ein Drehzahlwert beispielsweise in regelmäßigen Zeitabständen überprüft wird. Für den Fall, dass der Drehzahlwert nicht oder nur zum Teil erreicht ist, wird ein Fehlerfall erkannt.

Der Fehler des Drehzahlsystems kann z.B. daher resultieren, dass der Drehzahlsensor 50 und/oder der Drehzahlgeber 10 innerhalb der motorbetriebenen Vorrichtung 30 falsch positioniert oder defekt ist. Dies bewirkt eine Verfälschung oder ein Fehlen der Drehzahlsignale, die von der Drehzahlerfassungseinrichtung 20 weitergeleitet und mittels des erfindungsgemäßen Verfahrens als ein Fehler des Drehzahlsystems erkannt wird.

Ferner kann der Fehler auch aus Beschaltungsfehlern des Drehzahlsensors 50 bzw. der Drehzahlerfassungseinrichtung 20 bedingt sein.

Die Steuerungseinrichtung 100 kann beispielsweise als ein Mikrocontroller ausgebildet sein. Das erfindungsgemäße Verfahren kann dadurch vorteilhaft in Form eines Softwareprogramms für den Mikrocontroller implementiert werden. Ferner kann das erfindungsgemäße Verfahren auch auf computerlesbaren Datenträgern gespeichert und dadurch auf einfache Weise auf unterschiedlichen Steuerungseinrichtungen 100 implementiert bzw. ausgeführt werden.

Vorteilhaft ist zur Ausführung des erfindungsgemäßen Verfahrens keinerlei bzw. nur sehr wenig Zusatzaufwand erforderlich. Insbesondere ist an der Steuerungseinrichtung 100 ein zusätzlicher Testausgang vorzusehen, an den eine Testleitung angeschlossen wird, über die das genannte Testsignal bzw. die Testsequenz übertragen wird.

eine Kombination der vorgenannten Ansätze implementiert, so kann vorteilhaft je nach Fehlerart unterschieden werden, ob der Drehzahl-Signalgeber oder der Drehzahl-Signalempfänger defekt ist.

Zusammenfassend wird mit der Erfindung ein Verfahren zum Überprüfen eines Drehzahlsystems ("Tacho-System") einer motorbetriebenen Vorrichtung vorgeschlagen, mit dem das Drehzahlsystem in einen sicheren und definierten Zustand versetzt werden kann. Das Verfahren ermöglicht es zum Beispiel einem Service- bzw. Kundendienstbereich, gezielte Aktionen zur Behebung von Fehlern des Drehzahlsystems vorzunehmen. Vorteilhaft ist das erfindungsgemäße Verfahren bei Elektrowerkzeugen oder Waschmaschinen mit Universalmotoren bzw. mit Elektromotoren mit Anker/Läufer durchführbar, bei denen eine Drehzahlerfassung mittels einer Elektronik durchgeführt wird.

Der Fachmann wird die Merkmale der in den Ansprüchen definierten Erfindung in geeigneter Weise abändern oder miteinander kombinieren können.

## Patentansprüche

1. Verfahren zum Überprüfen einer Drehzahlerfassungseinrichtung (20) und einer als Elektrowerkzeug oder Waschmaschine ausgebildeten, motorbetriebenen Vorrichtung (30), aufweisend die Schritte:
a) Einschalten der motorbetriebenen Vorrichtung (30);
b) Prüfen, ob an einem ersten Eingang (E1) einer Steuerungseinrichtung (100) ein von der Drehzahlerfassungseinrichtung (20) erfasstes Drehzahlsignal der motorbetriebenen Vorrichtung (30) anliegt;
c) Ausgeben eines Testsignals über einen Ausgang (A) der Steuerungseinrichtung (100) an die Drehzahlerfassungseinrichtung (20), falls in Schritt b) kein Drehzahlsignal sensiert wird;
d) Senden des durch die Drehzahlerfassungseinrichtung (20) in einer definierten Art und Weise verarbeiteten Testsignals an den ersten Eingang (E1) der Steuerungseinrichtung (100);
e) Erkennen eines Fehlers der Drehzahlerfassungseinrichtung (20), falls das ausgegebene Testsignal am ersten Eingang (E1) der Steuerungseinrichtung (100) in der definierten Art und Weise nicht vorliegt;
f) Erfassen eines Drehzahlwerts der motorbetriebenen Vorrichtung (30) während einer Softstartphase, in der die Drehzahl der motorbetriebenen Vorrichtung (30) langsam an einen definierten Drehzahlwert herangeführt wird;
g) Erkennen eines Fehlers der motorbetriebenen Vorrichtung (30), falls der definierte Drehzahlwert innerhalb einer definierten Zeitspanne während der Softstartphase nicht erreicht wurde.

2. Verfahren nach Anspruch 1, aufweisend die weiteren Schritte:
h) Erfassen eines Motorstromsignals der motorbetriebenen Vorrichtung (30) an einem zweiten Eingang (E2) der Steuerungseinrichtung (100);
i) Erkennen eines Fehlers der Drehzahlerfassungseinrichtung (20), falls in Schritt b) kein Drehzahlsignal erfasst wird und das in Schritt h) erfasste Motorstromsignal einen definierten Pegel unterschreitet.

3. Verfahren nach einem der vorhergehenden Ansprüche 1 oder 2, aufweisend den weiteren Schritt:
j) Erkennen eines Fehlers der motorbetriebenen Vorrichtung (30), falls nach einer definierten Betriebsdauer der motorbetriebenen Vorrichtung (30) ein definierter Drehzahlwert nicht erreicht wurde.

## Claims

1. Method for checking a speed recording device (20) and a motorized apparatus (30) in the form of an electric tool or washing machine, having the steps of:
a) switching on the motorized apparatus (30);
b) checking whether a speed signal from the motorized apparatus (30), which is recorded by the speed recording device (20), is present at a first input (E1) of a control device (100);
c) outputting a test signal to the speed recording device (20) via an output (A) of the control device (100) if no speed signal is sensed in step b) ;
d) transmitting the test signal processed in a defined manner by the speed recording device (20) to the first input (E1) of the control device (100) ;
e) identifying a fault in the speed recording device (20) if the output test signal is not present at the first input (E1) of the control device (100) in the defined manner;
f) recording a speed value of the motorized apparatus (30) during a soft start phase in which the speed of the motorized apparatus (30) is slowly brought to a defined speed value;
g) identifying a fault in the motorized apparatus (30) if the defined speed value has not been reached within a defined period during the soft start phase.

2. Method according to Claim 1, having the further steps of:
h) recording a motor current signal from the motorized apparatus (30) at a second input (E2) of the control device (100);
i) identifying a fault in the speed recording device (20) if no speed signal is recorded in step b) and the motor current signal recorded in step h) undershoots a defined level.

3. Method according to either of the preceding Claims 1 and 2, having the further step of:
j) identifying a fault on the motorized apparatus (30) if a defined speed value has not been reached within a defined operating time of the motorized apparatus (30).

## Revendications

1. Procédé permettant de vérifier un système de mesure de vitesse de rotation (20) et un dispositif motorisé (30) réalisé sous la forme d'un outil électrique ou d'une machine à laver, présentant les étapes consistant à :
a) mettre en marche le dispositif motorisé (30) ;
b) contrôler si un signal de vitesse de rotation du dispositif motorisé (30), mesuré par le système de mesure de vitesse de rotation (20), est présent à une première entrée (E1) d'un système de commande (100) ;
c) délivrer un signal de test par l'intermédiaire d'une sortie (A) du système de commande (100) au système de mesure de vitesse de rotation (20), si à l'étape b) aucun signal de vitesse de rotation n'est détecté ;
d) envoyer le signal de test traité d'une certaine manière par le système de mesure de vitesse de rotation (20) à la première entrée (E1) du système de commande (100) ;
e) identifier un défaut du système de mesure de vitesse de rotation (20) si le signal de test délivré n'est pas présent comme défini à la première entrée (E1) du système de commande (100) ;
f) mesurer une valeur de vitesse de rotation du dispositif motorisé (30) pendant une phase de démarrage progressif dans laquelle la vitesse de rotation du dispositif motorisé (30) s'approche lentement d'une valeur de vitesse de rotation définie ;
g) identifier un défaut du dispositif motorisé (30) si la valeur de vitesse de rotation définie n'a pas été atteinte dans une période définie.

2. Procédé selon la revendication 1, présentant les étapes supplémentaires consistant à :
h) mesurer un signal de courant moteur du dispositif motorisé (30) à une deuxième entrée (E2) du système de commande (100) ;
i) identifier un défaut du système de mesure de vitesse de rotation (20) si à l'étape b) aucun signal de vitesse de rotation n'est mesuré et le signal de courant moteur mesuré à l'étape h) est inférieur à un niveau défini.

3. Procédé selon l'une quelconque des revendications précédentes 1 et 2, présentant l'étape supplémentaire consistant à :
j) identifier un défaut du dispositif motorisé (30) si une valeur de vitesse de rotation définie n'a pas été atteinte après une durée de fonctionnement définie du dispositif motorisé (30).
